(19) Europäisches Patentamt
European Patent Office
Office européen des brevets

(11) **EP 2 993 507 A1**

(12) **EUROPEAN PATENT APPLICATION**

(43) Date of publication:
09.03.2016 Bulletin 2016/10

(51) Int Cl.:
*G02B 13/02* (2006.01)      *G02B 27/64* (2006.01)
*G02B 7/08* (2006.01)

(21) Application number: 15183954.5

(22) Date of filing: 04.09.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 05.09.2014 KR 20140119365

(71) Applicant: Samsung Electronics Co., Ltd.
Gyeonggi-do 16677 (KR)

(72) Inventor: Yoneyama, Shuji
Gyeonggi-do (KR)

(74) Representative: Nederlandsch Octrooibureau
P.O. Box 29720
2502 LS The Hague (NL)

(54) **INNER FOCUSING TELEPHOTO LENS SYSTEM AND PHOTOGRAPHING APPARATUS INCLUDING THE SAME**

(57)      An inner focusing telephoto lens system and a photographing apparatus including the inner focusing telephoto lens system includes a relatively larger diameter lens and a lightweight focus lens group. The inner focusing telephoto lens system includes a first lens group having a positive refractive power, a second lens group having a negative refractive power, and a third lens group having the positive refractive power. The first lens group, second lens group and the third lens group are arranged sequentially from an object side to an image side. The inner focusing telephoto lens system performs focusing by moving the second lens group along an optical axis.

FIG. 1

**Description**

BACKGROUND

1. Field of the Disclosure

The present disclosure relates to inner focusing telephoto lens systems and photographing apparatuses including the same. More particularly, the present disclosure relates to telephoto lens systems including a lightweight focus lens group and photographing apparatuses including the same.

2. Description of the Related Art

Digital cameras or video cameras including a solid-state imaging device, such as a charge-coupled device (CCD) or a complementary metal-oxide semiconductor (CMOS), are widely used. In particular, the demand for an interchangeable lens camera is increasing.

As the demand for cameras with interchangeable lenses is increasing, the demand for a single focus lens camera, such as a telephoto lens or a wide angle lens, is also increasing, and the diameters of single focus lenses are increasing.

In still cameras or video cameras, there are auto focus lenses in wide use that automatically focus by a motor driving a focus lens group. Contrast auto focusing, a type of autofocus popular in smartphones, compact camera and mirrorless camera systems, measures contrast within a sensor field through a lens is based on a principle that an intensity difference of adjacent sensor pixels increases with a correct image focus, which permits adjustment until detection of a maximum contrast.

For example, a digital camera including a CCD or CMOS uses contrast auto focusing that automatically controls a contrast maximum location to a focus location based on a contrast signal transmitted by an imaging device. Such contrast auto focusing also checks the contrast maximum location by focusing past the contrast maximum location prior to focusing on the contrast maximum location. In contrast auto focusing, the focus lens group is quickly moved back and forth by a precise distance, and the weight of the lens group and thus it is necessary to further reduce the weight of the focus lens group rather than using an active method of projecting light and measuring a distance using reflected light or a phase difference detection method of calculating a phase difference of light that passes through a part different from an entrance pupil of a lens. However, it is difficult to realize a telephoto lens system including a large diameter lens and a lightweight focus lens group.

SUMMARY

The present disclosure provides an inner focusing telephoto lens systems including a large diameter lens and a lightweight focus lens group.

Also provided are photographing apparatuses including inner focusing telephoto lens systems including a large diameter lens and a lightweight focus lens group.

Additional aspects will be set forth in part in the detailed description which follows and, in part, will be apparent to a person of ordinary skill in the art from the description, or may be learned by practice of the presented embodiments.

According to an aspect of an embodiment, an inner focusing telephoto lens system includes a first lens group having a positive refractive power; a second lens group having a negative refractive power; and a third lens group having a positive refractive power, wherein the first lens group, second lens group, and third lens group are arranged sequentially from an object side to an image side. The first, second and third lens groups are preferably arranged along an optical axis of the telephoto lens system from the object side to the image side. The focusing of the inner focusing telephoto lens system includes moving the second lens group along the optical axis. The first lens group G1 may include a first positive lens, a second positive lens, a third negative lens, a fourth negative lens, which is a meniscus lens convex toward the object side, and a fifth positive lens sequentially from the object side. The first to fifth lenses of the first lens group are preferably arranged sequentially from the object side to the image side, and further preferably along the optical axis. The second lens group G2 may include cemented lenses including a sixth positive lens and a seventh negative lens arranged sequentially from the object side. The sixth and seventh lenses of the second lens group are preferably arranged sequentially from the object side to the image side, and further preferably along the optical axis. The third lens group G3 includes a stop at the object side of the third lens group. In addition, a hand shaking correction group may include some lenses which are at the image side of the stop and move in an substantially orthogonal direction with respect to the optical axis, that is the lenses of the hand shaking correction group are preferably movable in a substantially orthogonal direction with respect to the optical axis. The term "cemented" lenses shall be defined as any sort of bonding material known by persons of ordinary skill in the art used for joining lenses.

According to an aspect of the disclosure, the hand shaking correction group may have a negative refractive power and includes an eighth positive lens, a ninth negative lens, and a tenth negative lens sequentially from the object side, preferably to the image side and further preferably along the optical axis, wherein the eighth positive lens and the ninth negative lens are cemented lenses.

The inner focusing telephoto lens system may satisfy the following equation:

$$1.2<\beta2<3.5$$

wherein β2 denotes a magnification value of the second lens group when a lens is focused on an infinity distance.

In addition, the telephoto lens system may satisfy the following equation:

$$0.035<d1\text{-}2/f<0.100$$

wherein d1-2 denotes an air interval between the first lens group and the second lens group when the lens is focused on the infinity distance, in which d1-2 is to be understood as a single symbol for the air interval, that is the distance, between the first and second lens groups. In the equation f denotes the focal length of the telephoto lens system when the the lens is focused on the infinity distance.

Moreover, the telephoto lens system may satisfy the following equation:

$$1.60<f/f1<2.70$$

wherein f denotes a focal length of the telephoto lens system when the lens is focused on the infinity distance, and f1 denotes a focal length of the first lens group when the lens is focused on the infinity distance.

The telephoto lens system may satisfy the following equation:

$$n2n>1.85$$

wherein n2n denotes a refractive index in a d-Line of the seventh negative lens, that is a refractive index at a wavelength corresponding with the helium d-line (approximately 587.6 nm).

The second positive lens may have an Abbe number equal to or greater than 90.

According to another embodiment, a photographing apparatus may include a telephoto lens system, and an imaging device that receives light formed by the telephoto lens system. The telephoto lens system may include: a first lens group having a positive refractive power; a second lens group having a negative refractive power; and a third lens group having a positive refractive power, wherein the first lens group, second lens group, and third lens groups are arranged sequentially from an object side to an image side, wherein focusing of the telephoto lens system includes moving the second lens group along an optical axis. The first lens group may include a first positive lens, a second positive lens, a third negative lens, a fourth negative lens, which is a meniscus lens convex facing toward the object side, and a fifth positive lens sequentially from the object side, the second lens group may include cemented (adhered) lenses including a sixth positive lens and a seventh negative lens that are sequentially arranged from the object side. The third lens group may include a stop at the object side and a hand shaking correction group may include at least some lenses which are at the image side of the stop and move in substantially orthogonal direction with respect to the optical axis.

BRIEF DESCRIPTION OF THE DRAWINGS

These and/or other aspects will become apparent and more readily appreciated by a person of ordinary skill in the art from the following description of the embodiments, taken in conjunction with the accompanying drawings in which:

FIG. 1 illustrates a telephoto lens system according to an embodiment of the disclosure;
FIG. 2 is a longitudinal aberration diagram in an infinity distance of a telephoto lens system according to an embodiment of the disclosure;
FIG. 3 is a longitudinal aberration diagram in a minimum distance of a telephoto lens system according to an embodiment of the disclosure;

FIG. 4 illustrates a telephoto lens system according to another embodiment of the disclosure;

FIG. 5 is a longitudinal aberration diagram in an infinity distance of a telephoto lens system according to another embodiment of the disclosure;

FIG. 6 is a longitudinal aberration diagram in a minimum distance of a telephoto lens system according to another embodiment of the disclosure;

FIG. 7 illustrates a telephoto lens system according to another embodiment of the disclosure;

FIG. 8 is a longitudinal aberration diagram in an infinity distance of a telephoto lens system according to another embodiment of the disclosure;

FIG. 9 is a longitudinal aberration diagram in a minimum distance of a telephoto lens system according to another embodiment of the disclosure; and

FIG. 10 illustrates a photographing apparatus according to an embodiment of the disclosure.

## DETAILED DESCRIPTION

Reference will now be made in detail to embodiments of the disclosure, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. In addition, an artisan should appreciate that the specific embodiments are for illustrative purposes and it is within the written description that elements of the appended claims may be combined from various embodiments of the disclosure.

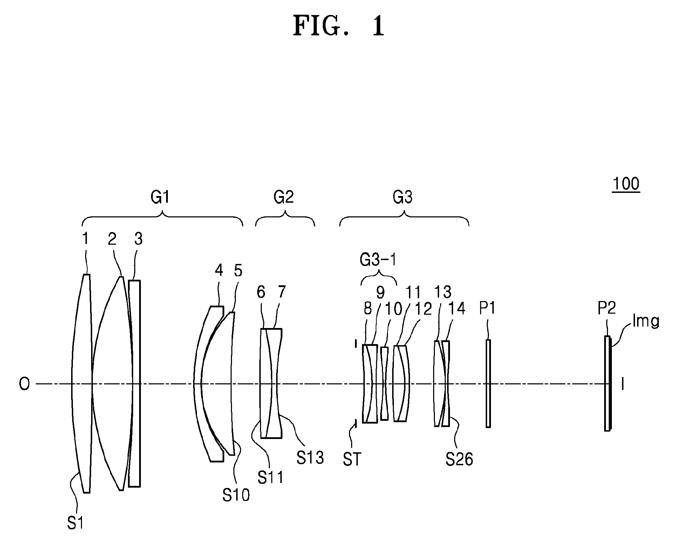

FIG. 1 illustrates a telephoto lens system 100 according to an embodiment of the disclosure.

The telephoto lens system 100 may include a first lens group G1 having a positive refractive power, a second lens group G2 having a negative refractive power, and a third lens group G3 having a positive refractive power. The first lens group G1, second lens group G2 and third lens group G3 are arranged from an object side O to an image side I, and along an optical axis of the telephoto lens system.

The second lens group G2 may move along an axis to perform a focusing operation. As such, the telephoto lens system 100 shown in FIG. 1 is an inner focusing telephoto lens system that performs focusing by moving a lens inside the telephoto lens system 100.

With continued reference to FIG. 1, the first lens group G1 may include a first positive lens 1, a second positive lens 2, a third negative lens 3, a fourth negative lens 4, and a fifth positive lens 5 sequentially from the object side O. The first positive lens 1 may be, for example, a bi-convex lens or a meniscus lens that is convex toward the object side O. The second positive lens 2 may be, for example, a bi-convex lens or a meniscus lens that is convex toward the object side O. The third negative lens 3 may be, for example, a bi-concave lens. The fourth negative lens 4 may be, for example, a meniscus lens that is convex toward the object side O. The fifth positive lens 5 may be, for example, a meniscus lens that is convex toward the object side O. The fourth negative lens 4 and the fifth positive lens 5 may be, for example, bonded to each other but are not limited thereto. Although not shown, the fourth negative lens 4 and the fifth positive lens 5 may be spaced apart from each other.

In the telephoto lens system 100 of which overall length is shorter than a focal length, since the focal length or aberration increases due to a negative refractive power as a whole of a rear group including the second lens group G2 and the third lens group G3, the first lens group G1 needs to correct chromatic aberration or spherical aberration.

For example, a relatively bright and relatively large diameter telephoto lens having approximately an f-number of F2.8 sufficiently needs to correct spherical aberration or chroma aberration. To this end, two positive lenses may be disposed at the object side O that is closest to the first lens group G1, thereby reducing an occurrence of spherical aberration, and correcting spherical aberration and chromatic aberration using a negative lens. The second positive lens 2 of the first lens group G1 may inhibit chromatic aberration by employing an anomalous dispersion material having an Abbe number equal to or greater than 90. A light flux converged by the first positive lens 1, the second positive lens 2, and the third negative lens 3 is received on a convex surface of the fourth negative lens 4 in a meniscus shape that is convex toward the object side O, which may reduce an entrance angle, thereby reducing an occurrence of aberration. The fourth negative lens 4 and the fifth positive lens 5 cooperate with each other to correct aberration. The fifth positive lens 5 may also employ the anomalous dispersion material having the Abbe number equal to or greater than 90.

A relatively large diameter telephoto lens system may sufficiently correct aberration using a configuration of the first lens group G1. The second lens group G2 may include a sixth positive lens 6 and a seventh negative lens 7 sequentially from the object side O. The sixth positive lens 6 and the seventh negative lens 7 may be cemented lenses.

In the present embodiment, auto focusing that drives a lens by using a motor and automatically focuses the lens may be employed. The second lens group G2 may perform auto focusing. For example, contrast auto focusing may utilize a lightweight lens group in order to quickly reverse and operate the auto focus. In an embodiment, the second lens group G2 is lightweight by including positive and negative cemented lenses. The focus lens group that moves inside the telephoto lens system 100 needs to correct A chromatic aberration such that the entire chromatic aberration is not changed.

The third lens group G3 may include a stop "ST" at the object side O and a hand shaking correction group G3-1 that prevents hand shaking by moving some lenses from an image side I of the stop ST in an almost orthogonal direction with respect to the optical axis. The hand shaking correction group G3-1 may include some lenses arranged at the object side O that are the closest to the object than other lenses of the third lens group G3. For example, in FIG. 1, there are three lenses in the handshake correction group G3-1.

The hand shaking correction group G3-1 may have a negative refractive power. The hand shaking correction group G3-1 may include, for example, an eighth positive lens 8, a ninth negative lens 9, and a tenth negative lens 10 sequentially from the object side O. The eighth positive lens 8 and the ninth negative lens 9 may be cemented lenses.

With reference to FIG. 1, the stop ST may have a relatively small diameter so as to reduce an entire size of a stop mechanism. Thus, the stop ST may be disposed in a lens group of the image side I having a relatively smaller diameter rather than in the first lens group G1 having a relatively larger diameter. With regard to lens groups G2 and G3, for example, If the stop ST is disposed in the second lens group G2, since the stop ST would need to move together with the second lens group G2 during focusing, a moving part of the stop ST may be heavy, which may be contradictory to reducing the weight of the second lens group G2. Thus, as shown in FIG. 1, the stop ST may be disposed in the third lens group G3, which remains fixed during focusing.

When hand shaking is prevented by moving some lenses at the image side I of the stop ST, the hand shaking correction group G3-1 may be lightweight. For example, lenses of the third lens group G3 nearest the stop ST may have relatively small diameters, and thus the hand shaking correction group G3-1 may be disposed next to the stop ST, and thus a diameter of the hand shaking correction group G3-1 may be reduced, and the hand shaking correction group G3-1 may be more lightweight as a result.

In the telephoto lens system 100 shown in FIG. 1, the second and third lens groups G2 and G3, which are arranged after the first lens group G1 (and in which G1 has a positive refractive power), may have a construction that has negative refractive power as a whole. Thus, to prevent hand shaking, it may be preferable to correct aberration for the hand shaking correction group G3-1 that is required to have a predetermined degree of refractive power as a negative refractive power. If, for example, the hand shaking correction group G3-1 were to have a positive refractive power, it may be necessary to further increase the negative refractive power of another group of lenses to achieve an overall negative refractive power of the third lens group G3 when considered as a whole, and thus aberration of a positive lens group and aberration of a negative lens group are adversely affected by each other, thereby easily increasing sensitivity of the telephoto lens system and increasing the number of lenses.

The hand shaking correction group G3-1 may appropriately correct chromatic aberration and various other aberrations by including in its construction the eighth positive lens 8 and the ninth negative lens 9 (that are the cemented lenses) and also includes the tenth negative lens 10.

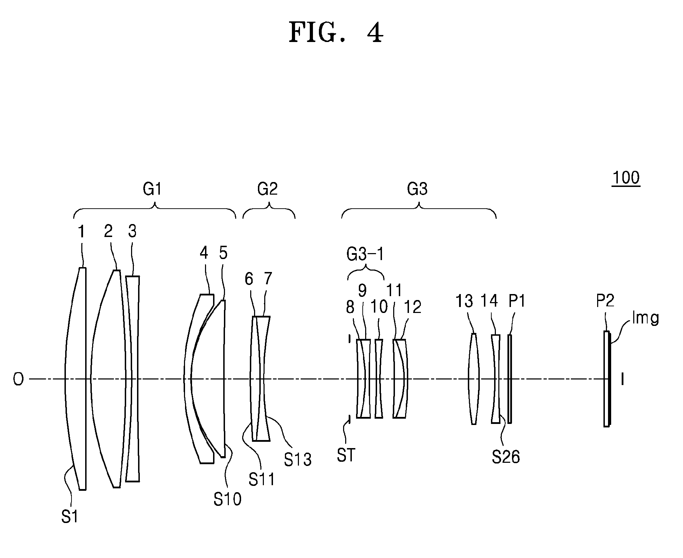

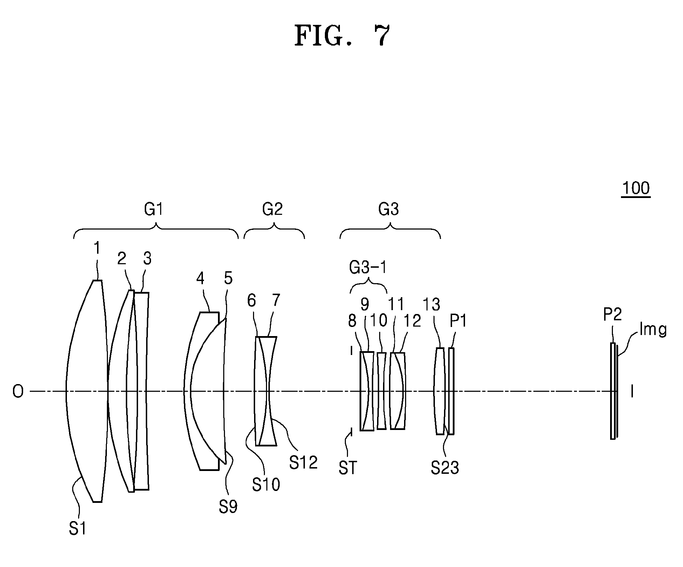

Meanwhile, a plurality of lenses may be further provided on the image side I of the tenth negative lens 10. For example, an eleventh positive lens 11 and a twelfth negative lens 12 may be provided. As shown in FIG. 1, the eleventh positive lens 11 and the twelfth negative lens 12 may be cemented lenses. At least one lens may be further provided on the image side I of the twelfth negative lens 12. For example, a thirteenth lens 13 and a fourteen lens 14 may be provided on the image side I of the twelfth negative lens 12 in the embodiment illustrated in FIGS. 1 and 4. For example, the thirteenth lens 13 may be a positive lens, and the fourteenth lens 14 may be a negative lens. FIG. 7 illustrates an example in which the thirteenth lens 13 may be provided on the image side I of the twelfth negative lens 12.

The telephoto lens system 100 may satisfy the following Equation 1,

$$1.2<\beta2<3.5 \quad < \text{Equation 1}>;$$

wherein $\beta2$ denotes a magnification of the second lens group G2 when a lens is focused on an infinity distance. The magnification is an imaging magnification.

With reference to Equation 1, when the magnification $\beta2$ is less than the lowest limit of Equation 1, the focusing sensitivity may decrease. As a result, the amount in which the second lens group G2 moves when focusing may increase, which may thereby result an increase in the overall length of a lens system or an increase in an aberration change in a minimum distance. When the magnification $\beta2$ exceeds the highest limit of Equation 1, focusing sensitivity may increase. As a result, the amount in which the second lens group G2 moves when focusing may decrease, while a refractive power of the second lens group G2 increases. Therefore, it may be difficult to correct aberration only by using the cemented lenses of the second lens group G2.

The telephoto lens system 100 may satisfy the following Equation 2,

$$1.60 < f/f1 < 2.70 \quad \text{<Equation 2>}$$

wherein f denotes a focal length of the telephoto lens system 100 when the lens is focused on the infinity distance, and f1 denotes a focal length of the first lens group G1 when the lens is focused on the infinity distance.

Equation 2 limits a refractive power of the first lens group G1. If the refractive power of the first lens group G1 increases when f/f1 exceeds the highest limit of Equation 2, it may be difficult to appropriately correct chromatic aberration or spherical aberration in the first lens group G1. Referring to Equation 1, the second lens group G2 may move within a light flux converged in the first lens group, and an entrance height of light with respect to the second lens group G2 may decrease as the second lens group G2 moves toward a minimum distance side, and thus aberration caused by a change in the minimum distance may reduced, which may thereby inhibit the change in the minimum distance. When f/f1 is less than the lowest limit of Equation 2, the refractive power of the first lens group G1 may be reduced and aberration may be better corrected, whereas the overall length of the lens system may increase. Since convergence is also weak, the amount in which the entrance height of the light changes with respect to the second lens group G2 may be reduced. Therefore, the inhibition of the change in the minimum distance may be prevented or reduced, and thus aberration in the minimum distance may not be maintained.

The telephoto lens system 100 may satisfy the following Equation 3,

$$0.035 < d1\text{-}2/f < 0.100 \quad \text{< Equation 3>}$$

wherein d1-2 denotes an air interval between the first lens group G1 and the second lens group G2 when the lens is focused on the infinity distance.

If d1-2 is reduced when (d1-2/f) is less than the lowest limit of Equation 3, since the second lens group G2 is closer to the first lens group G1 having a large diameter, a diameter of the second lens group G2 also increases, it may be difficult to make the second lens group G2 lightweight. When (d1-2/f) exceeds the highest limit of Equation 3, since the diameter of the second lens group G2 may be reduced, it may be easy to make the second lens group G2 lightweight, whereas a moving space may not be secured during focusing of the second lens group G2.

The telephoto lens system 100 may satisfy the following Equation 4,

$$n2n > 1.85 \qquad\qquad \text{< Equation 4>}$$

wherein n2n denotes a refractive index in a d-Line of the seventh negative lens 7 of the second lens group G2. In a d-line refers to a wavelength corresponding to the helium d-line, which is approximately 587.6 nm.

If (n2n) is lower than the lowest limit of Equation 4, since the change in the minimum distance of the second lens group G2 that is the focus lens group is inhibited, it is necessary to reduce aberration of the second lens group G2. The number of lenses is 2 to make the second lens group G2 lightweight, and thus correction of aberration has a small degree of freedom. As shown in Equation 4, a high refractive index material may be selected for the seventh negative lens 7, thereby simultaneously correcting chromatic aberration and spherical aberration.

As described above, the telephoto lens system 100 according to an embodiment may make the focus lens group lightweight to perform auto focusing, and may be realized as a relatively large diameter telephoto lens system.

A telephoto lens system may be realized through various designs in embodiments below. Hereinafter, EFL denotes an overall focal length when a lens is focused on the infinity distance and uses a unit of mm, FNO denotes an F number, BFL denotes a back focal length and uses the unit of mm, and w denotes a half-field of view and uses a unit of degree. R denotes a curvature radius (units in mm). TH denotes a thickness of a lens or a space between lenses (units in mm). ND denotes a refractive index at the d-Line. Vd denotes an Abbe number. In the drawings in which the embodiments are shown, at least one filter may be provided at a point that is closest to the image side I. For example, the filter may include a first filter P1 and a second filter P2. The filter may include one of, for example of a low pass filter, an IR-cut filter, and cover glass. However, a lens system may be configured without a filter. In the drawings, IMG denotes an upper surface.

<First Embodiment>

FIG. 1 illustrates the telephoto lens system 100 according to a first embodiment. The followings represent design data of the first embodiment. However, the claims invention is not in anyway limited to such values, which are provided to aid an artisan. Lens surface numbers are arranged sequentially from the object side O to the image side I.

A lens surface of each lens is partially shown in FIG. 1, which applies to the drawings of other embodiments. The values in table 1 hold for the telephoto lens system focused at infinity. The thickness TH after lens surface S10 for the telephoto lens system focused at infinity corresponds to d1-2.

EFL= 291.97, BFL= 0.98, FNO=2.88, w=4.18

[Table 1]

| Lens Surface | R | TH | Nd | Vd |
|---|---|---|---|---|
| S1 | 207.797 | 10.730 | 1.48749 | 70.4 |
| S2 | -1331.507 | 0.300 | | |
| S3 | 98.708 | 21.000 | 1.43875 | 94.9 |
| S4 | -262.808 | 0.100 | | |
| S5 | -288.092 | 3.500 | 1.78590 | 43.9 |
| S6 | 5388.297 | 28.710 | | |
| S7 | 84.103 | 3.000 | 1.74330 | 49.2 |
| S8 | 46.358 | 0.207 | | |
| S9 | 46.360 | 15.890 | 1.43875 | 94.9 |
| S10 | 366.953 | 15.250 | | |
| S11 | 490.634 | 6.000 | 1.80518 | 25.5 |
| S12 | -106.559 | 2.000 | 1.88300 | 40.8 |
| S13 | 81.365 | 41.750 | | |
| S14(ST) | Infinity | 4.500 | | |
| S15 | -277.940 | 4.100 | 1.84666 | 23.8 |
| S16 | -56.241 | 1.800 | 1.60311 | 60.7 |
| S17 | 148.641 | 3.700 | | |
| S18 | -158.269 | 1.800 | 1.80610 | 33.3 |
| S19 | 123.928 | 3.400 | | |
| 20 | 209.019 | 6.730 | 1.80420 | 46.5 |
| S21 | -39.192 | 1.800 | 1.84666 | 23.8 |
| S22 | -116.747 | 12.750 | | |
| S23 | 253.967 | 5.260 | 1.88100 | 40.1 |
| S24 | -89.594 | 1.110 | | |
| S25 | -84.359 | 1.500 | 1.51742 | 52.2 |
| S26 | 1457.940 | 20.000 | | |
| S27 | Infinity | 1.500 | 1.51680 | 64.2 |
| S28 | Infinity | 60.300 | | |
| S29 | Infinity | 2.000 | 1.51680 | 64.2 |
| S30 | Infinity | | | |

The following values represents a magnification MAG and the back focal length BFL in a minimum distance.

MAG= 0.174

BFL= 0.98

The following value represents an air interval TH10 between the fifth negative lens 5 of the first lens group G1 and the sixth positive lens 6 of the second lens group G2 during focusing in the minimum distance, and air interval TH13 between the seventh positive lens 7 of the second lens group G2 and the stop ST of the third lens group G3, also during focusing at the minimum distance.

TH(10)= 30.296

TH(13)= 26.704

The following represents values of Equations 1, 2, 3, and 4 of the first embodiment.

[Table 2]

| Equation 1 | β2=2.66 |
|---|---|
| Equation 2 | f/f1=291.97/142.39=2.05 |
| Equation 3 | d1-2/f=15.25/291.97 = 0.052 |
| Equation 4 | n2n=1.88300 |

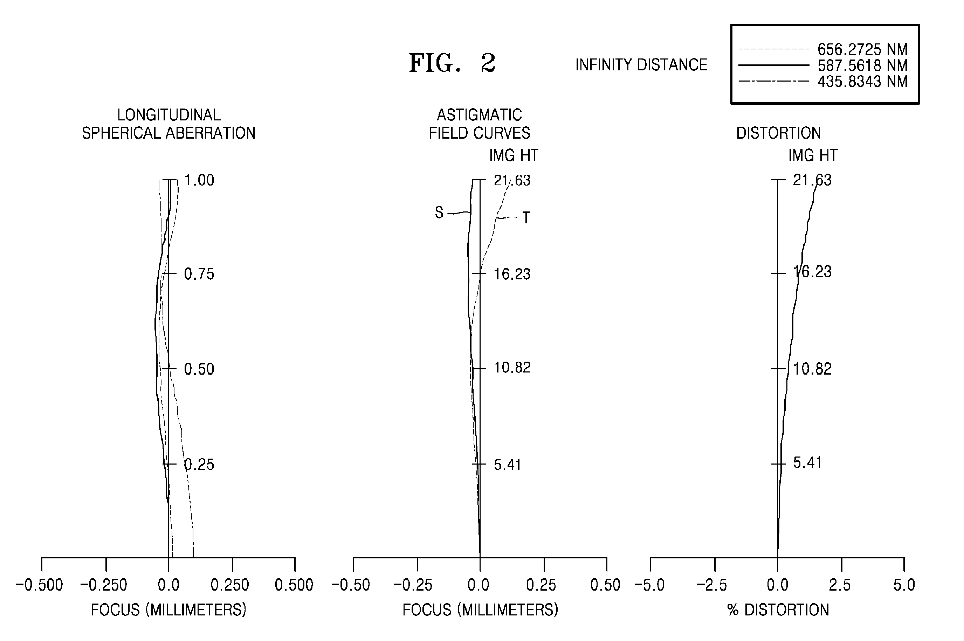

FIG. 2 illustrates longitudinal spherical aberration, astigmatic field curves, and distortion in the infinity distance of the telephoto lens system 100 according to the first embodiment. The astigmatic field curves include a tangential field curvature T and a sagittal field curvature S.

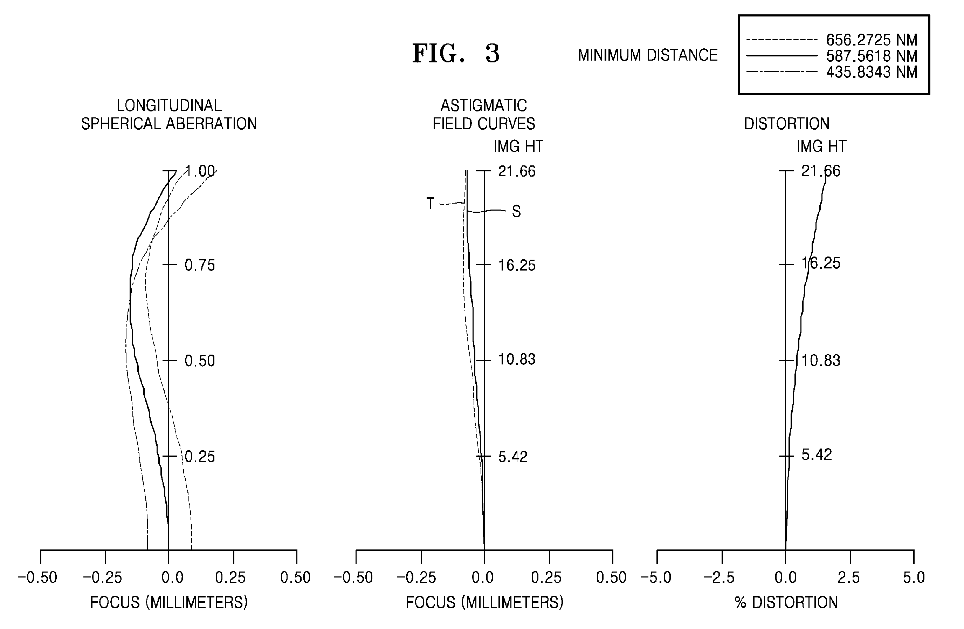

FIG. 3 illustrates longitudinal spherical aberration, astigmatic field curves, and distortion in the minimum distance of the telephoto lens system 100 according to the first embodiment.

<Second Embodiment>

FIG. 4 illustrates the telephoto lens system 100 according to a second embodiment. The followings represent design data of the second embodiment and the appended claims are not limited by the illustrative example of the second embodiment. The values in table 3 hold for the telephoto lens system focused at infinity. The thickness TH after lens surface S10 for the telephoto lens system focused at infinity corresponds to d1-2.

EFL= 294.134, BFL=1.000, FNO = 2.88, w= 4.14

[Table 3]

| Lens Surface | R | TH | Nd | Vd |
|---|---|---|---|---|
| S1 | 179.361 | 10.580 | 1.48749 | 70.4 |
| S2 | 3714.762 | 2.690 | | |
| S3 | 113.340 | 18.000 | 1.43875 | 94.9 |
| S4 | -395.115 | 3.200 | | |
| S5 | -393.652 | 3.500 | 1.78590 | 43.9 |
| S6 | 1683.290 | 23.710 | | |
| S7 | 95.418 | 3.500 | 1.74330 | 49.2 |
| S8 | 52.215 | 0.110 | | |
| S9 | 51.922 | 17.000 | 1.43875 | 94.9 |
| S10 | 853.240 | 13.560 | | |
| S11 | 330.306 | 5.000 | 1.80518 | 25.5 |
| S12 | -282.338 | 2.000 | 1.88300 | 40.8 |
| S13 | 123.675 | 44.440 | | |
| S14(ST) | Infinity | 4.450 | | |
| S15 | -357.453 | 3.890 | 1.84666 | 23.8 |

(continued)

| Lens Surface | R | TH | Nd | Vd |
|---|---|---|---|---|
| S16 | -69.384 | 1.800 | 1.60311 | 60.7 |
| S17 | 259.561 | 3.700 | | |
| S18 | -210.705 | 1.800 | 1.80610 | 33.3 |
| S19 | 119.159 | 7.260 | | |
| S20 | -291.779 | 5.000 | 1.80420 | 46.5 |
| S21 | -44.129 | 2.370 | 1.84666 | 23.8 |
| S22 | -114.716 | 31.330 | | |
| S23 | 151.777 | 5.500 | 1.88100 | 40.1 |
| S24 | -121.039 | 8.040 | | |
| S25 | -83.975 | 1.800 | 1.51742 | 52.2 |
| S26 | 1457.940 | 4.987 | | |
| S27 | Infinity | 1.500 | 1.51680 | 64.2 |
| S28 | Infinity | 47.952 | | |
| S29 | Infinity | 2.000 | 1.51680 | 64.2 |
| S30 | Infinity | 1.000 | | |

The following represents the magnification MAG and the back focal length BFL in the minimum distance.

MAG= 0.172

BFL= 1.000

The following represents the air interval TH10 between the fifth negative lens 5 of the first lens group G1 and the sixth positive lens 6 of the second lens group G2 during focusing in the minimum distance, and the air interval TH13 between the seventh positive lens 7 of the second lens group G2 and the stop ST of the third lens group G3, also during focusing at the minimum distance.

TH(10)= 39.123

TH(13)= 18.877

The following represents values of Equations 1, 2, 3, and 4 of the second embodiment.

[Table 4]

| Equation 1 | $\beta2$=1.63 |
|---|---|
| Equation 2 | f/f1=294.13/154.13=1.91 |
| Equation 3 | d1-2/f=13.560/294.13=0.046 |
| Equation 4 | n2n=1.88300 |

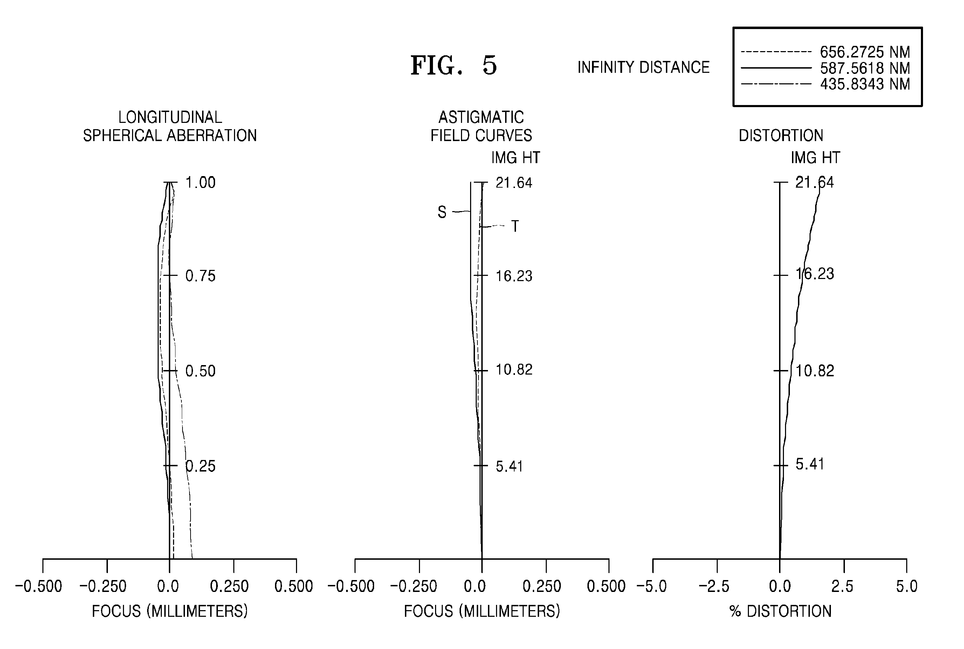

FIG. 5 illustrates spherical aberration, astigmatic field curves, and distortion in the infinity distance of the telephoto lens system 100 according to the second embodiment. The astigmatic field curves include a tangential field curvature T and a sagittal field curvature S.

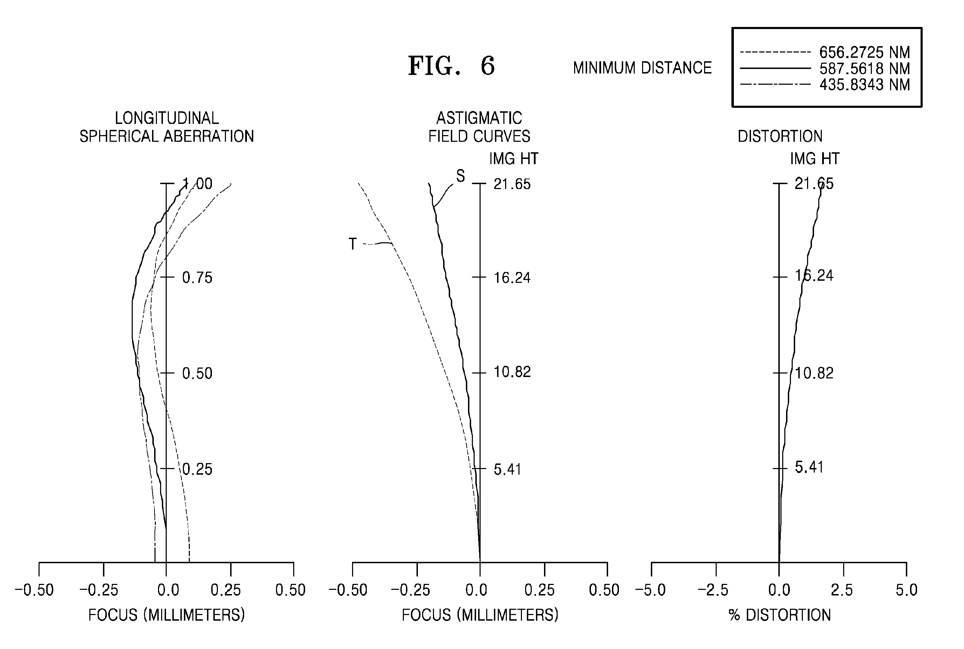

FIG. 6 illustrates spherical aberration, astigmatic field curves, and distortion in the minimum distance of the telephoto lens system 100 according to the second embodiment.

<Third Embodiment>

FIG. 7 illustrates the telephoto lens system 100 according to a third embodiment. The followings represent design data of the third embodiment, and the appended claims are not to be limited by the illustrative example of FIG. 7 and Table 5. The values in table 5 hold for the telephoto lens system focused at infinity. The thickness TH after lens surface S9 for the telephoto lens system focused at infinity corresponds to d1-2.

EFL= 291.58, BFL=1.00, FNO = 2.88, w= 4.20

[Table 5]

| Lens surface | R | TH | Nd | Vd |
|---|---|---|---|---|
| S1 | 106.578 | 21.459 | 1.49700 | 81.6 |
| S2 | -418.488 | 0.202 | | |
| S3 | 118.698 | 9.438 | 1.49700 | 81.6 |
| S4 | 306.465 | 5.849 | | |
| S5 | -450.638 | 3.500 | 1.66680 | 33.1 |
| S6 | 494.274 | 20.096 | | |
| S7 | 92.928 | 3.000 | 1.71300 | 53.9 |
| S8 | 42.550 | 16.935 | 1.49700 | 81.6 |
| S9 | 336.926 | 15.274 | | |
| S10 | 389.787 | 6.000 | 1.80518 | 25.5 |
| S11 | -106.904 | 2.000 | 1.88300 | 40.8 |
| S12 | 74.366 | 41.727 | | |
| S13(ST) | Infinity | 4.828 | | |
| S14 | -172.014 | 4.029 | 1.84666 | 23.8 |
| S15 | -52.105 | 1.800 | 1.60311 | 60.7 |
| S16 | 189.020 | 3.374 | | |
| S17 | -201.769 | 1.800 | 1.80610 | 33.3 |
| S18 | 121.439 | 3.293 | | |
| S19 | 172.089 | 6.844 | 1.88300 | 40.8 |
| S20 | -41.016 | 1.800 | 1.84666 | 23.8 |
| S21 | -176.612 | 13.990 | | |
| S22 | 170.800 | 5.500 | 1.88300 | 40.8 |
| S23 | -650.062 | 2.357 | | |
| S24 | Infinity | 2.000 | 1.51680 | 64.2 |
| S25 | Infinity | 80.205 | | |
| S26 | Infinity | 2.000 | 1.51680 | 64.2 |
| S27 | Infinity | 1.000 | | |

The following represents the magnification MAG and the back focal length BFL in the minimum distance.

MAG= 0.175

BFL= 1.00

The following represents air interval TH9 between the fifth negative lens 5 of the first lens group G1 and the sixth positive lens 6 of the second lens group G2 during focusing in the minimum distance, and the air interval TH12 between the seventh positive lens 7 of the second lens group G2 and the stop ST of the third lens group G3, also during focusing at the minimum distance.

TH (9)= 30.179

TH (12)= 26.821

The following represents values of Equations 1, 2, 3, and 4 of the third embodiment.

[Table 6]

| Equation 1 | $\beta2$=2.88 |
|---|---|
| Equation 2 | f/f1=291.58/143.16 =2.04 |
| Equation 3 | d1-2/f=15.274/291.58=0.052 |
| Equation 4 | n2n=1.88300 |

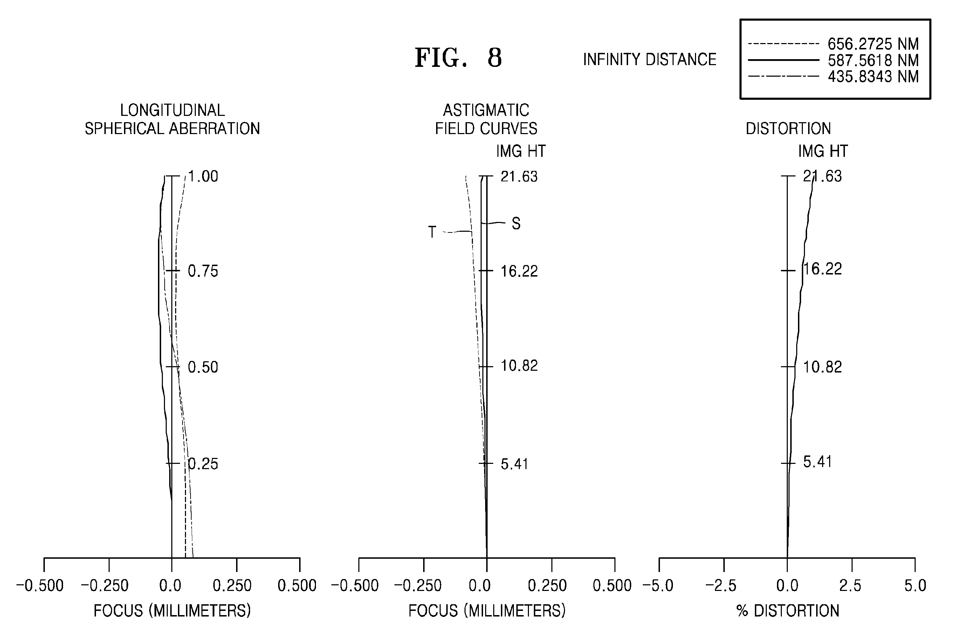

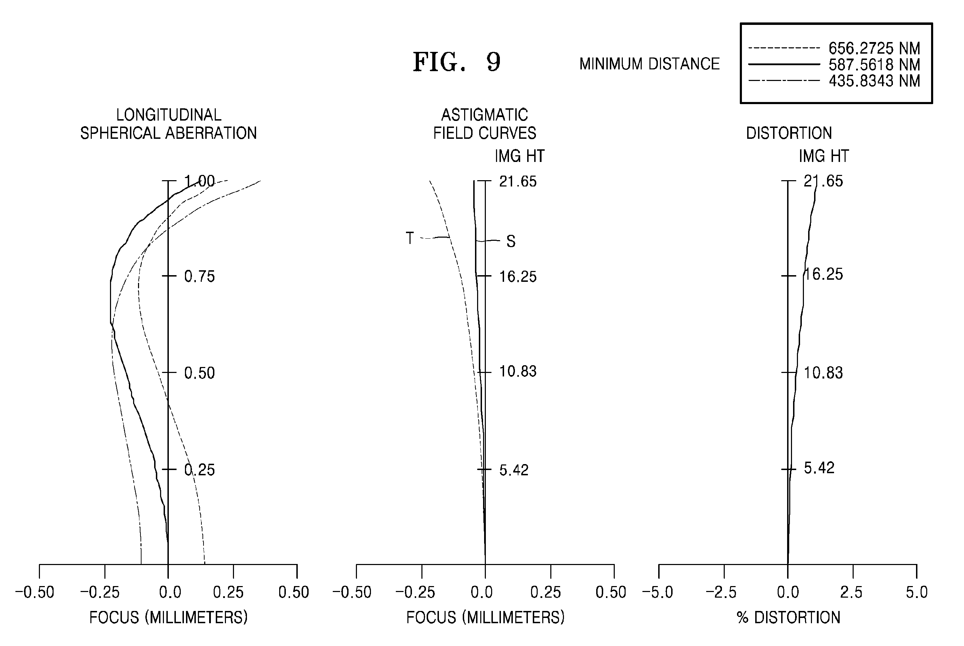

FIG. 8 illustrates spherical aberration, astigmatic field curves, and distortion in the infinity distance of the telephoto lens system 100 according to the third embodiment. The astigmatic field curves include a tangential field curvature T and a sagittal field curvature S. FIG. 9 illustrates spherical aberration, astigmatic field curves, and distortion in the minimum distance of the telephoto lens system 100 according to the third embodiment.

As described above, the telephoto lens system 100 according to the embodiments may be suitably applied to a still camera, a video camera, etc. and may employ inner focusing. The telephoto lens system 100 has a large diameter of approximately F 2.8.

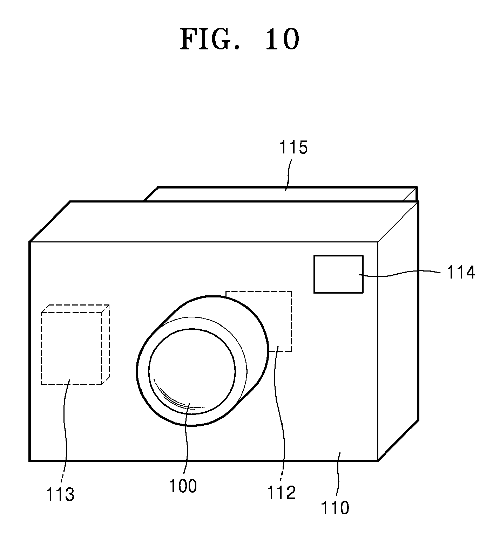

FIG. 10 illustrates a photographing apparatus including the telephoto lens system 100, according to an embodiment. The telephoto lens system 100 may include the telephoto lens system described above, and a microprocessor/controller comprising circuitry configured for operation. The movement of the lenses may be made by, for some non-limiting examples, an autofocus (AF) motor linked to a microprocessor/controller, and such an AF motor may comprise various types of motors such as linear stepper motors, ultrasonic-type motors, focus by wire, etc., that may have a micro-structure. The photographing apparatus includes an imaging device 112 that receives light formed by the telephoto lens system 100. The photographing apparatus may include a writing unit 113 comprising circuitry on which information corresponding to a subject image that is photoelectrically converted from the imaging device 112 is recorded, and a view finder 114 used for observing the subject image. Also, a display unit 115 on which the subject image is displayed may be provided. Here, although the view finder 114 and the display unit 115 are individually provided, the display unit 115 may be provided without the view finder 114. The photographing apparatus illustrated in FIG. 10 is merely an example, is not limited thereto, and may be applied to various optical devices in addition to a camera. As described above, the photographing apparatus capable of performing fast auto focusing may be realized by applying the telephoto lens system 100 according to the embodiment to a photographing apparatus, such as a digital camera.

A photographing apparatus including an imaging device such as a CCD or a CMOS may use contrast auto focusing that focuses on a contrast maximum location based on a contrast signal transmitted by the imaging device. Such contrast auto focusing checks the contrast maximum location by focusing past the contrast maximum location prior to focusing on the contrast maximum location, and thus movement of the focus lens group may need to be quick and accurate. Thus, the photographing apparatus employing contrast auto focusing may include a lightweight focus lens group to thereby be able to quickly and accurately focus on an object. In addition, the photographing apparatus according to the embodiment may employ an active method or a phase difference detection method for auto focusing.

As described above, according to the one or more of the above embodiments, the telephoto lens system may be small in size, easily transportable, and may employ focusing in which only some inner lenses thereof move.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope as defined by the following claims.

The apparatuses and methods of the disclosure can be implemented in hardware, and in part as firmware or via the execution of software or computer code in conjunction with hardware that is stored on a non-transitory machine readable medium such as a CD ROM, a RAM, a floppy disk, a hard disk, or a magneto-optical disk, or computer code downloaded over a network originally stored on a remote recording medium or a non-transitory machine readable medium and stored on a local non-transitory recording medium for execution by hardware such as a processor, so that the methods described herein are loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc., that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor", "microprocessor" "controller", or "control unit" constitute hardware in the claimed disclosure that contain circuitry that is configured for operation. Under the broadest reasonable interpretation, the appended claims constitute statutory subject matter in compliance with 35 U.S.C. §101 and none of the elements are software per se.

The definition of the terms "unit" or "module" as referred to herein are to be understood as constituting hardware circuitry such as a CCD, CMOS, SoC, AISC, FPGA, a processor or microprocessor (a controller) configured for a certain desired functionality, or a communication module containing hardware such as transmitter, receiver or transceiver, or a non-transitory medium comprising machine executable code that is loaded into and executed by hardware for operation, in accordance with statutory subject matter under 35 U.S.C. §101 and do not constitute software per se.

**Claims**

1.   An inner focusing telephoto lens system comprising:

a first lens group having a positive refractive power;
a second lens group having a negative refractive power; and
a third lens group having a positive refractive power,
wherein the first lens group, second lens group and third lens group are arranged sequentially from an object side to an image side,
wherein the lens system is configured to perform focusing by moving the second lens group along an optical axis, and
wherein the first lens group comprises a first positive lens, a second positive lens, a third negative lens, a fourth negative lens comprising a meniscus lens having a convex structure facing toward the object side, and a fifth positive lens, which are arranged sequentially from the object side,
the second lens group comprises cemented lenses comprising a sixth positive lens and a seventh negative lens, which are arranged sequentially from the object side after the first lens group, and
the third lens group includes a stop at the object side and a hand shaking correction group having at least some lenses which are arranged sequentially at an image side of the stop and which are moveable in a substantially orthogonal direction with respect to the optical axis.

2.   The inner focusing telephoto lens system of claim 1, wherein the hand shaking correction group has a negative refractive power and comprises an eighth positive lens, a ninth negative lens, and a tenth negative lens arranged sequentially from the object side, wherein the eighth positive lens and the ninth negative lens comprise cemented lenses.

3.   The inner focusing telephoto lens system of any one of the preceding claims, wherein the inner focusing telephoto lens system has a structure that satisfies the following equation:

$$1.2 < \beta 2 < 3.5,$$

wherein $\beta 2$ is a magnification value of the second lens group when a lens is focused on an infinity distance.

4.   The inner focusing telephoto lens system of any one of the preceding claims, wherein the telephoto lens system has a structure that satisfies the following equation:

$$0.035 < d1\text{-}2/f < 0.100,$$

wherein d1-2 is an air interval between the first lens group and the second lens group when the lens is focused on the infinity distance.

5. The inner focusing telephoto lens system of any one of preceding claims, wherein the telephoto lens system has a structure that satisfies the following equation:

$$1.60 < f/f1 < 2.70,$$

wherein f is a focal length of the telephoto lens system when the lens is focused on an infinity distance, and f1 denotes a focal length of the first lens group when the lens is focused on the infinity distance.

6. The inner focusing telephoto lens system of any one of preceding claims, wherein the telephoto lens system has a structure that satisfies the following equation:

$$n2n > 1.85,$$

wherein n2n is a refractive index in a d-Line of the seventh negative lens.

7. The inner focusing telephoto lens system of any one of preceding claims, wherein at least one of the second positive lens and the fifth positive lens has an Abbe number equal to or greater than 90.

8. A photographing apparatus comprising:

a telephoto lens system according to any one of the preceding claims; and
an imaging sensor that is configured and arranged to receive light from the telephoto lens system.

# FIG. 1

FIG. 2    INFINITY DISTANCE

| | 656.2725 NM |
| --- | --- |
| | 587.5618 NM |
| | 435.8343 NM |

LONGITUDINAL
SPHERICAL ABERRATION

ASTIGMATIC
FIELD CURVES
IMG HT

DISTORTION
IMG HT

FOCUS (MILLIMETERS)

FOCUS (MILLIMETERS)

% DISTORTION

EP 2 993 507 A1

EP 2 993 507 A1

# FIG. 3

MINIMUM DISTANCE

| | |
|---|---|
| --------- | 656.2725 NM |
| ———— | 587.5618 NM |
| —·—·—·— | 435.8343 NM |

LONGITUDINAL
SPHERICAL ABERRATION

ASTIGMATIC
FIELD CURVES

IMG HT

1.00

0.75

0.50

0.25

-0.50   -0.25   0.0   0.25   0.50

FOCUS (MILLIMETERS)

T

S

21.66

16.25

10.83

5.42

-0.50   -0.25   0.0   0.25   0.50

FOCUS (MILLIMETERS)

DISTORTION

IMG HT

21.66

16.25

10.83

5.42

-5.0   -2.5   0.0   2.5   5.0

% DISTORTION

# FIG. 4

## FIG. 5

| | |
|---|---|
| ----------- | 656.2725 NM |
| ———— | 587.5618 NM |
| —·—·—·— | 435.8343 NM |

LONGITUDINAL
SPHERICAL ABERRATION

ASTIGMATIC
FIELD CURVES
IMG HT

DISTORTION
IMG HT

-0.500  -0.250  0.0  0.250  0.500
FOCUS (MILLIMETERS)

-0.500  -0.250  0.0  0.250  0.500
FOCUS (MILLIMETERS)

-5.0  -2.5  0.0  2.5  5.0
% DISTORTION

EP 2 993 507 A1

18

FIG. 6

MINIMUM DISTANCE

| | |
|---|---|
| ------- | 656.2725 NM |
| ———— | 587.5618 NM |
| —··—··— | 435.8343 NM |

LONGITUDINAL
SPHERICAL ABERRATION

ASTIGMATIC
FIELD CURVES
IMG HT

DISTORTION
IMG HT

-0.50   -0.25   0.0   0.25   0.50
FOCUS (MILLIMETERS)

-0.50   -0.25   0.0   0.25   0.50
FOCUS (MILLIMETERS)

-5.0   -2.5   0.0   2.5   5.0
% DISTORTION

EP 2 993 507 A1

19

# FIG. 7

EP 2 993 507 A1

# FIG. 8

INFINITY DISTANCE

| | |
|---|---|
| ------------ | 656.2725 NM |
| ———————— | 587.5618 NM |
| — · — · — | 435.8343 NM |

LONGITUDINAL
SPHERICAL ABERRATION

ASTIGMATIC
FIELD CURVES
IMG HT

DISTORTION
IMG HT

-0.500  -0.250  0.0  0.250  0.500
FOCUS (MILLIMETERS)

-0.500  -0.250  0.0  0.250  0.500
FOCUS (MILLIMETERS)

-5.0  -2.5  0.0  2.5  5.0
% DISTORTION

## FIG. 9

MINIMUM DISTANCE

EP 2 993 507 A1

---- 656.2725 NM
——— 587.5618 NM
—·— 435.8343 NM

LONGITUDINAL
SPHERICAL ABERRATION

ASTIGMATIC
FIELD CURVES
IMG HT

DISTORTION
IMG HT

FOCUS (MILLIMETERS)

FOCUS (MILLIMETERS)

% DISTORTION

# FIG. 10

Europäisches
Patentamt

European
Patent Office

Office européen
des brevets

# EUROPEAN SEARCH REPORT

Application Number

EP 15 18 3954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 115 188 A (NISHIO AKIHIRO [JP] ET AL) 5 September 2000 (2000-09-05) * figure 6; example 6; table 1 * ----- | 1-8 | INV. G02B13/02 G02B27/64 G02B7/08 |
| X | US 5 745 306 A (SATO SUSUMU [JP]) 28 April 1998 (1998-04-28) * column 11, line 38 - column 13, line 11; claim 1; figure 4; example 2; table 2 * ----- | 1-8 | |
| X | WO 2013/179659 A1 (NIPPON KOGAKU KK [JP]) 5 December 2013 (2013-12-05) * paragraph [0069] - paragraph [0076]; figure 3; example 2; table 2 * ----- | 1-8 | |

TECHNICAL FIELDS
SEARCHED (IPC)

G02B

The present search report has been drawn up for all claims

| Place of search | Date of completion of the search | Examiner |
|---|---|---|
| Munich | 25 January 2016 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 3954

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2016

| Patent document cited in search report | | Publication date | Patent family member(s) | | Publication date |
|---|---|---|---|---|---|
| US 6115188 | A | 05-09-2000 | NONE | | |
| US 5745306 | A | 28-04-1998 | JP | 3541283 B2 | 07-07-2004 |
| | | | JP | H08327897 A | 13-12-1996 |
| | | | US | 5745306 A | 28-04-1998 |
| WO 2013179659 | A1 | 05-12-2013 | JP | 2013250289 A | 12-12-2013 |
| | | | US | 2015085387 A1 | 26-03-2015 |
| | | | WO | 2013179659 A1 | 05-12-2013 |

EPO FORM P0459

For more details about this annex : see Official Journal of the European Patent Office, No. 12/82